Europäisches Patentamt

European Patent Office       (11) Publication number:        **0 046 287**

Office européen des brevets                                **A1**

(12)     **EUROPEAN PATENT APPLICATION**

(21)  Application number: 81106352.8          (51)  Int. Cl.³: **G 05 D 16/20**
                                                           **// B65G53/66**
(22)  Date of filing: 15.08.81

(30)  Priority: 18.08.80 US 178958          (71)  Applicant: **Dynamic Air Inc., P.O. Box 43074, St. Paul Minnesota 55164 (US)**

(43)  Date of publication of application: **24.02.82**
    **Bulletin 82/8**                      (72)  Inventor: **Nolan, Phillip A., 15641 Willamette Street, Forest Lake Minnesota 55025 (US)**

(84)  Designated Contracting States: **AT BE CH DE FR GB IT LI LU NL SE**       (74)  Representative: **Modiano, Guido et al, MODIANO & ASSOCIATI S.A.S. Via Meravigli, 16, I-20123 Milan (IT)**

(54)  **Fluid regulator.**

㊼  In a system for providing pressurized fluid, usually gas, a valve is located in the fluid line and a pressure-sensing device is tapped into the line downstream from the valve to produce electrical signals which control the operation of fluid operated devices to position the valve to control the flow of fluid as it comes from the source and passes through the line. The apparatus is constructed so that when the electrical signals are turned off, the valve is closed to stop the flow of the pressurized fluid.

ACTORUM AG

COMPLETE DOCUMENT

0046287

This invention is used for regulating the flow of pressurized fluid between the source of the fluid and the ultimate destination. In particular, it is directed for use with pneumatic conveying equipment which uses pressurized gas (air) for conveying granular or powdery materials through conveying lines from their sources to their destinations. In these pneumatic conveyors the pressurized air is provided by a source such as an air compressor and is fed through an air delivery line into the conveying line or conduit where the granular materials are fed from their sources, such as storage bins or the like. The pressurized air then carries these granular materials down the conveying line to their destination such as to other bins, mixing vessels or bagging machines or similar. It is very important that both the pressure and the flow rate of the pressurized air that is provided is regulated. Also, some operations require air at one pressure during one sequence and air at another pressure during a different sequence of operation. For example, air at pressure as low as 20 psi might be needed to convey some very light powdery material and later pressure of 60 psi might be needed to convey a heavier granular material which might be mixed with the lighter material in a mixer. In the instant invention, not only are the pressures maintained within their allowable tolerances but the pressure can be readily switched from one level to another without having to readjust the regulator or the pressure source.

In the past in order to turn off the pressure, it was necessary to either turn off the pressure source or provide a separate on/off switching device. The instant invention can be used to close off the availability of the pressurized air without need of additional valving or control devices.

When supplying air under pressure for pneumatic conveying devices, it sometimes occurs that the pressure at the intake end drops quickly for some reason and this results in backflow of the material being conveyed. In the past, this has often lead to the granular and sometimes abrasive materials getting into the control devices and damaging them so they become inoperative. In the present invention, only a single mechanically operated valve is located in the main air line and is quite ruggedly constructed so it is not subject to any substantial damage in the event of backflow of material. Also, the system can be used to regulate the flow in large volume air lines which has been difficult to do in the past.

This regulator can also be designed with a relieving valve or without a relieving valve, as shown in the drawing. If, for example, the regulator pressure setting is adjusted downward, with a relieving valve there is temporary backflow of air which is exhausted out the port of the relieving valve until the pressure in the conveying line reaches the level of the new pressure setting. Here, there is no backflow and the air pressure in the conveying line bleeds down to the new pressure setting.

A mechanically operated valve, preferably of the disc type and commonly referred to as a butterfly valve, is located in the main air line or conduit which supplies pressurized air to the system between the air sources, such as an air compressor, and the utilization devices. The valve is operated by the piston of an air cylinder which is located outside of the air line and the piston position is controlled by electrically operated solenoids. Downstream of the valve a pressure-sensing line is tapped into the air conveying conduit and is coupled to pressure-sensitive electrical switches which, in turn, provide electrical signals to control the operation of the solenoids. The switches are preset to operate at given pressures. In general, when the pressure setting is exceeded, the switches operate to close the valve and when the pressure falls below a preset lower level the switches operate to open the valve. This serves to maintain the air pressure downstream at a generally stable desired level. As a further feature, the apparatus is designed so that when the electrical power to the solenoids is switched off, the air cylinder is biased to position the piston to close the valve. In this fashion merely by turning off the electrical power to the control device the pressurized air to the utilization devices can be turned off.

Preferred embodiments of the invention will be described hereinafter with reference to the drawings in which :

Fig. 1 is a diagramatic view showing the function and operation of a preferred embodiment of the invention; and

Fig. 2 is a sectional view shown in somewhat greater detail the operation of the valve for controlling the fluid flow.

For use by pneumatic conveying devices, pressurized air is supplied from a suitable source such as an air compressor (not shown) and is fed into an air line or pipe or conduit 10 and flows downstream to the utilization devices (also not shown). Typically, the air is used in conveying lines to carry or push materials, typically granular materials such as sand or lighter materials such as flour, down the conveying line from a source to a destination. In a typical case, for example, bins of granular material will feed the conveying line and the pressurized air will carry these granular materials down the conveying line to a mixing vessel in which the various materials are mixed together and then further pneumatically conveyed to a storage bin or to a bagging machine. The air pressure and the air flow rate are fairly critical both from an energy conservation view and for affecting the rate of flow of the material. It can be visualized that a heavy material might require conveying air at a much higher pressure than a light material. The rate of flow might depend upon the production rate desired or it might depend upon the abrasiveness of the material. In any event, it is quite important to maintain the pressure being provided to the conveying line at a relatively stable level. The pressure level might be changed from time to time depending on the type of material being conveyed and other factors but once the pressure is chosen, it should be maintained at a fairly steady level.

Located in the air conduit 10 downstream from the air source is a valve 11. While the design for the valve is a matter of choice, preferably, the valve is a disc type of the nature commonly referred to as a butterfly valve. Typically, a butterfly valve has a disc 12 which is pivotally mounted on a rotatable shaft 13 with suitable seals 14 located on an inner surface of the main housing 15 to close off the flow of air from the input port to the output port of housing 15 when the disc is rotated to the closed position. The shaft 13 is operated by and is connected to one end of an arm 16 which has its other end attached to the outer extension 17A of piston 17 of air cylinder 18.

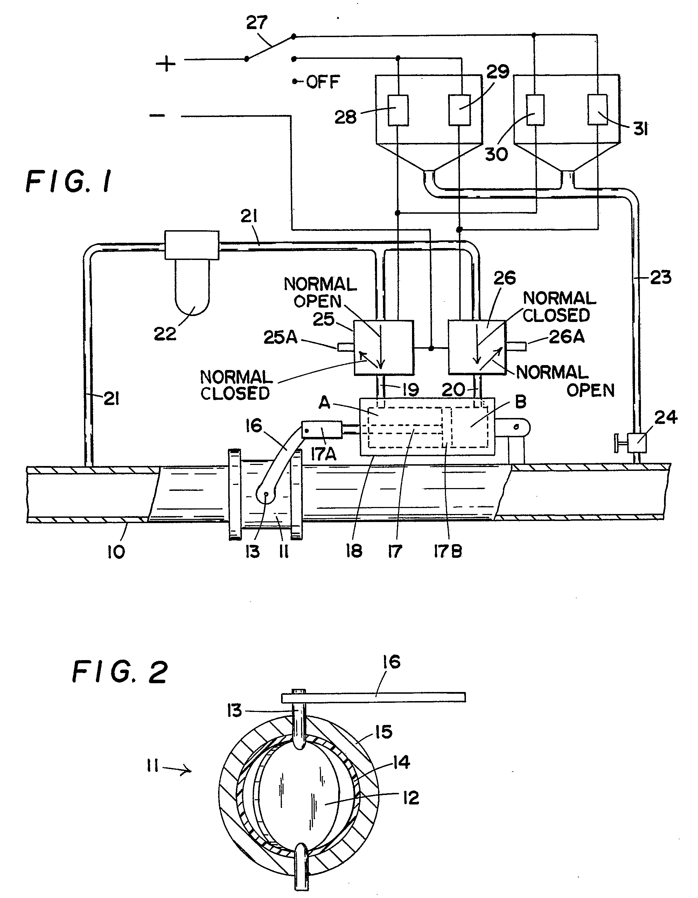

The construction of the air cylinder 18 is arbitrary and a suitable air cylinder to perform its function in the system can be readily selected and/or designed by one of ordinary skill in the art. The cylinder, in a typical fashion, has two chambers A and B separated by the head 17B of the piston 17. The location of the piston determines the volume of the respective chambers A and B and as the piston moves, the size of the chambers changes. Chamber A has an air inlet 19 and chamber B has an air inlet 20. Control pressurized air for operating the air cylinder 18 is obtained from the same source that provides the main air line pressure and can be conveniently obtained by tapping into conduit 10 upstream from the valve 11 such as illustrated in Fig. 1 by control air line 21. The control air goes through a suitable filter such as illustrated at 22 and then is fed into the chambers A and B respectively through electrically operated solenoids 25 and 26. Suitable solenoids can be selected from those commercially available or designed by one of ordinary skill in the art to perform the necessary function. The operation of the solenoids is illustrated diagramatically in Fig. 1. Solenoids 25 and 26 are operated to connect ports 19 and 20 of chambers A and B respectively to control air line 21 to feed pressurized air into the respective chambers or to connect ports 19 and 20 to the atmosphere so that the pressure within the respective chambers is allowed to drop toward atmospheric pressure. There is one important design characteristic required of solenoids 25 and 26. When the electrical power is removed from the solenoid actuating coils, one of the solenoids operates so that its associated air port 19 or 20 is coupled to receive pressurized air from the control air line 21 and the other solenoid is operated to open its associated air port to the atmosphere. In the drawing, solenoid 25, when de-energized, normally closes off its exhaust port 25A to atmosphere and opens port 19 to control air line 21. When solenoid 26 is de-energized, it normally opens its exhaust port 26A to atmosphere thereby opening port 20 to atmosphere and closed control air line 21 to prevent feeding any pressurized air to port 20. In this fashion then, with power removed from the solenoids, chamber A will be pressurized and chamber B will be at atmospheric pressure which will tend to move piston 17 rightward, as illustrated in the drawing, to its furthermost position. This acts to close off valve 11 thereby totally stopping the flow of any air through conduit 10 downstream to the utilization devices. A manually operated switch 27 can be conveniently located to manually selectively turn off the power to solenoids 25 and 26 thereby stopping the flow of air to the conveying line.

Electrical power for operating solenoids 25 and 26 is provided through pressure-sensitive switches 28 and 29 respectively. These pressure-sensitive switches are well known and can be readily selected by one of ordinary skill in the art to perform the function as required. In substance, these switches have normally open and normally closed terminals and the common is connected to one or the other depending upon whether the pressure applied to the switch is sufficient to trigger the switch action. The switches are preset to operate when the applied pressure reaches a prescribed level, within a given tolerance. In Fig. 1, solenoid 25 is electrically connected to the normally closed terminal of pressure switch 28 and solenoid 26 is electrically connected to the normally closed terminal of pressure switch 29. The pressure switches 28 and 29 are pneumatically coupled to pressure-sensing line 23 which is tapped into conduit 10 downstream from valve 11. Pressure switch 28 is set at the low end of the permitted range of pressure variation and pressure switch 29 is set to operate at the high end of the permissible range.

In a typical case, for example only, pressure switch 28 might be set to operate at 40 psi and pressure switch 29 might be set to operate at 42 psi. With the power off, the solenoids 25 and 26 are biased as described earlier with pressurized air being fed into chamber A and chamber B being connected to the atmosphere to position piston 17 to close valve 11. When power is applied, initially both solenoids 25 and 26 are energized since they are connected to the normally closed terminals of their respective pressure switches 28 and 29. Assuming, which is likely the case, that the downstream pressure is below the setting of pressure switch 28, both solenoids 25 and 26 will be energized so that now pressurized air is fed into chamber B through solenoid 26 and chamber A is coupled to the atmosphere through solenoid 25. This starts to move the cylinder piston 17 leftward to open valve 11 and air flow starts through the conduit 10. When the pressure downstream, as it appears in pressure-sensing line 23, rises above the setting of pressure switch 28 solenoid 25 is again de-energized so that air is supplied from line 21 into chamber A. When the pressures in chambers A and B become equal, the piston 17 and valve 11 will remain in that fixed position maintaining the downstream pressure steady at that level. If the downstream pressure should increase to exceed the setting of pressure switch 29, it will activate pressure switch 29 to deenergize solenoid 26 so that chamber B will now be exhausted to atmosphere which results in piston 17 moving rightward again to start closing off valve 11 to lower the pressure downstream. When the downstream pressure falls below the setting of pressure switch 29, air pressure from the control line 21 is again fed into chamber B and the piston motion will stop when there is equilibrium of pressure in the two chambers. Should the downstream pressure drop below the setting of pressure switch 28, the switch deactuates and solenoid 25 is energized causing chamber A to exhaust to atmospheric pressure and piston 17 moves leftward further opening valve 11 until the downstream pressure rises to a level sufficient to actuate pressure switch 28. This will then cause chamber A to become pressurized and when pressure equilization of the two chambers is reached, the valve will remain fixed in that position.

Another set of pressure-sensitive switches 30 and 31 may be provided and operated electrically and pneumatically in parallel with switches 28 and 29 except that only one set of switches is used at one given time in the operation of the system. Pressure switches 30 and 31 would similarly be set respectively at the low and high ends of the permissible range but this would be at different pressure settings. For example, pressure switch 30 might be set at 60 psi and switch 31 at 62 psi and switch 27 would be positioned to provide power to switches 30 and 31. The switches 30 and 31 would then operate similarly to switches 28 and 29 except that they would keep valve 11 positioned so that the downstream pressure is in the range of 60 and 62 psi as differentiated from the 40 to 42 psi range provided by switches 28 and 29. This can be particularly useful where during one sequence of operation, heavy material may have to be conveyed in the pneumatic conveying system and during another sequence light material requiring less air pressure might have to be conveyed. In the past, it was always necessary to readjust the output of the pressure source and reset the air regulator in order to change the pressure setting and to keep it controlled within the permissible range. Here, the mere operation of an electrical switch will bring into play a new set of pressure sensitive switches which have been previously set to the desired range of pressures and valve 11 then will automatically respond to these settings to provide the new pressure and maintain it within the tolerance limits.

It can be observed that in the event there should be a sudden decrease in the pressure upstream so that the pressure at the pneumatic conveyor is greater than in the air supply line 10, material might be driven back into conduit 10. The only device in air line 10 is the butterfly valve 11 and because of its relatively simple and rugged construction it would likely suffer little or no damage from the material entering into the valve chamber. Furthermore, in the nonrelieving embodiment shown, should the regulator be set to a new lower pressure level, either by manual adjustment or by changing the pressure switches, there is no backflow of material and the pressure in the conveying line merely bleeds down to the new lower pressure level. Also, because a butterfly valve of the

0046287

nature described is used in the instant invention, large volumes of air can be controlled and regulated using the instant invention as compared to what has been possible in the past. Also, the components that are used in the invention are commonplace, off-the-shelf, commercially available items which can be easily purchased or, if necessary, easily manufactured. Highly sophisticated and expensive components are not required. Manually operated valve 24 is normally open but can be closed for maintenance, repair or testing of the system.

claim**s**

1. **An apparatus** for regulating the flow of pressurized gas in a conduit **characterized in** comprising :

valve means located in the conduit for controlling the flow of the gas;

pressure sensitive electrical switch means set to produce an electrical signal when the pressure level is below a certain level and for providing another electrical signal when the pressure level exceeds a prescribed level;

means for directly coupling said pressure sensitive electrical switch means to the conduit downstream of the valve means to apply the gas pressure to said pressure sensitive switch means;

a double acting gas operated device having a movable member;

means directly connecting said movable member to said conduit valve means for moving said conduit valve means to control the flow of fluid in the conduit; and

electrically operated valve means directly electrically coupled to said pressure sensitive switch means responsive to the electrical signals produced by said pressure sensitive switch means for directing gas into the gas operated device for positioning the movable member whereby said conduit valve means is operated to control the fluid in the conduit in accordance with the pressure sensed downstream.

2. **A system according to** claim 1 wherein said electrically operated valve means comprises:

a first valve for directing gas into said double acting air operated device to move the movable member in a first direction when energized; and

a second valve for directing gas into said double acting air operated device to move the movable member in the opposite direction when not energized.

3. **A system according to** claim 2 wherein said first electrically operated valve is electrically coupled to said low level pressure sensitive switch and the second electrically operated valve is electrically coupled to the other pressure sensitive switch.

4. A system according to claim 1 wherein said electrically operated valve means is biased such that when not electrically energized it directs gas into the double acting gas operated device to position the movable member to close said conduit valve means.

5. A system according to claim 4 wherein the electrically operated valve means is connected to the pressure sensitive switch means in a manner such that when the latter is electrically de-energized the former directs gas into the gas operated device to position the movable member to close said conduit valve means.

0046287

FIG. 1

FIG. 2

European Patent
Office

**EUROPEAN SEARCH REPORT**

0046287

Application number

EP 81 10 6352

| Category | Citation of document with indication, where appropriate, of relevant passages | Relevant to claim | CLASSIFICATION OF THE APPLICATION (Int. Cl.³) |
|---|---|---|---|
| X | <u>US - A - 1 756 824</u>  (F. HASEMANN)<br>  * Page 1, line 33 to page 2, line 33; figure * | 1-3 | G 05 D 16/20//<br>B 65 G 53/66 |
| X | <u>DE - C - 565 230</u> (F. HASEMANN et al. )<br>  * page 2, lines 9-111; figures 1,3 * | 1-3 | |
| | <u>FR - A - 2 402 837</u> (J. SIRAND)<br>  * Page 1, line 16 to page 2, line 38; figure * | 2 | **TECHNICAL FIELDS SEARCHED (Int. Cl.³)** |
| | <u>US - A - 2 992 302</u> (A.E. SCHULER)<br>  * Column 1, line 37 to column 4, line 25; figure 1 * | 3 | G 05 D 16/20<br>B 65 G 53/66 |
| | <u>GB - A - 837 114</u> (INDUSTRIAL GUARDING EQUIPMENT)<br>  * page 1, lines 9-36; line 74 to page 2, line 116; figures 1,2,3 * | 4,5 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-11-1981 | POINT |

EPO Form 1503.1  06.78